Europäisches Patentamt

European Patent Office

Office européen des brevets

(11) Veröffentlichungsnummer: **0 465 790 A1**

# EUROPÄISCHE PATENTANMELDUNG

(21) Anmeldenummer: **91107274.2**

(51) Int. Cl.5: **A01B 63/114**, A01D 41/14

(22) Anmeldetag: **04.05.91**

(30) Priorität: **05.07.90 DE 4021496**

(43) Veröffentlichungstag der Anmeldung:
**15.01.92 Patentblatt 92/03**

(84) Benannte Vertragsstaaten:
**AT DE FR NL**

(71) Anmelder: **CLAAS SAULGAU GMBH**
**Postfach 1154**
**W-7968 Saulgau(DE)**

(72) Erfinder: **Schulz, Wilfried**
**Prälat-Hufnagelstrasse 17/1**
**W-7968 Saulgau(DE)**
Erfinder: **Schelkle, Roland**
**Schaulesmühle**
**W-7968 Saulgau(DE)**

(54) **Kreiselmähwerk zum Frontanbau an Schlepper.**

(57) Die Erfindung bezieht sich auf ein Kreiselmähwerk zum Frontanbau an Schlepper, das um eine Querachse (7) schwenkbar mit einem Tragrahmen (3) verbunden ist. Die Mähtrommeln (9) werden mittels Gleittellern (11) über den Boden geführt.

Damit das Kreiselmähwerk (4) beim Auftreffen seiner Gleitteller (11) auf ein Hindernis diesem um die Querachse (7) schnell ausweichen kann, sind an einer oder an mehreren Trommelachsen Meßglieder (18) angebracht, die einen Impuls an einen Meßverstärker (20) geben, der seinerseits ein elektromagnetisch-hydraulisches Steuerventil (21) aktiviert, das einen doppelt wirkenden hydraulischen Hubzylinder (15) ansteuert, der bewirkt, daß das ganze Kreiselmähwerk (4) um die Querachse (7) rechts oder linksdrehend verschwenkt wird.

Die Einrichtung dient allgemein auch zum Anpassen an Bodenwellen oder Bodenunebenheiten.

Fig. 1

Die Erfindung bezieht sich auf ein Kreiselmähwerk zum Frontanbau nach dem Gattungsbegriff des Anspruches 1.

Ein derartiges Kreiselmähwerk ist z. B. in der DE-PS 3022887 offenbart. Bei Kreiselmähwerken dieser Art ist es nicht nur wichtig, daß sie beim Auftreffen auf Bodenunebenheiten nach oben oder unten ausweichen können, sondern daß die Mähwerke auch um eine horizontale Querachse beweglich sind, damit sich die Schneidwerkzeuge der Bodenkontur bestmöglich anpassen können. Dies ist bei der oben genannten Ausführung eines Kreiselmähwerkes in der Regel möglich. Wenn aber die Fahrgeschwindigkeit erhöht ist und/oder kurzwellige Bodenunebenheiten vorliegen, dann reichen die von den Gleittellern der Mähtrommeln ausgeübten Stellkräfte nicht aus, um das ganze Mähwerk entgegen seiner Massenträgheit der Bodenkontur entlang zu führen. Das hat zur Folge, daß die Schneidwerkzeuge in den Boden schlagen oder daß sie sich weit vom Boden abheben und eine überlange Stoppel erzeugen.

Dieser Nachteil soll mit einer Ausführung nach der gegenwärtigen Erfindung beseitigt werden. Dies soll entsprechend dem Anspruch 1 dadurch bewirkt werden, daß zwischen dem Maschinengestell und einem Bauteil der Dreipunkt-Aufhängung ein doppelt wirkender Hydraulikzylinder oder dergleichen als Stellglied eingeschaltet wird, der von einem Meßglied angesteuert wird, das in Wirkverbindung mit einem, den Boden abtastenden Bauteil mindestens einer Mähtrommel steht. Da die Abtastung, Verstärkung und Weiterleitung des Meßsignals praktisch verzögerungslos erfolgt und mittels der Hydraulik große Kräfte aufgebracht werden können, kann das ganze Mähwerk so schnell um eine Querachse verschwenkt werden, daß die Schneidwerkzeuge der Bodenkontur sehr genau folgen.

Nach einer bevorzugten Ausführungsform wird das Meßglied an mindestens einer Trommelachse derart angebracht, daß es auf Biegemomente in einer in Fahrtrichtung liegenden Vertikalebene anspricht, die von einem Gleitteller auf dessen zugehörige Trommelachse übertragen werden.

Da auf die Gleitteller sowohl Normalkräfte vom Boden her wirken, als auch horizontale Reibungskräfte (Fahrwiderstand), die beide Biegemomente an der Trommelachse erzeugen können und da der Einfluß der Biegemomente aus den Reibungskräften auf die Messung möglichst klein bleiben soll, ist es zweckmäßig, das Meßglied aus einem Satz von Dehn-Meßstreifen zu bilden, die dicht oberhalb der Lagerung des Gleittellers an der Trommelachse angeordnet sind.

Weitere wichtige und erfindungserhebliche Ausführungsformen ergeben sich aus den Unteransprüchen 4 - 7.

Die Erfindung wird anhand von vier Abbildungen beispielsweise erläutert:

Fig. 1 zeigt ein Kreiselmähwerk in Arbeitsstellung auf ebenem Boden in Seitenansicht, mit einer schematischen Darstellung der Regeleinrichtung.

Fig. 2 zeigt den gleichen Gegenstand, wobei das Mähwerk auf abschüssigem Boden läuft.

Fig. 3 zeigt den gleichen Gegenstand, wobei das Mähwerk auf ansteigendem Boden läuft.

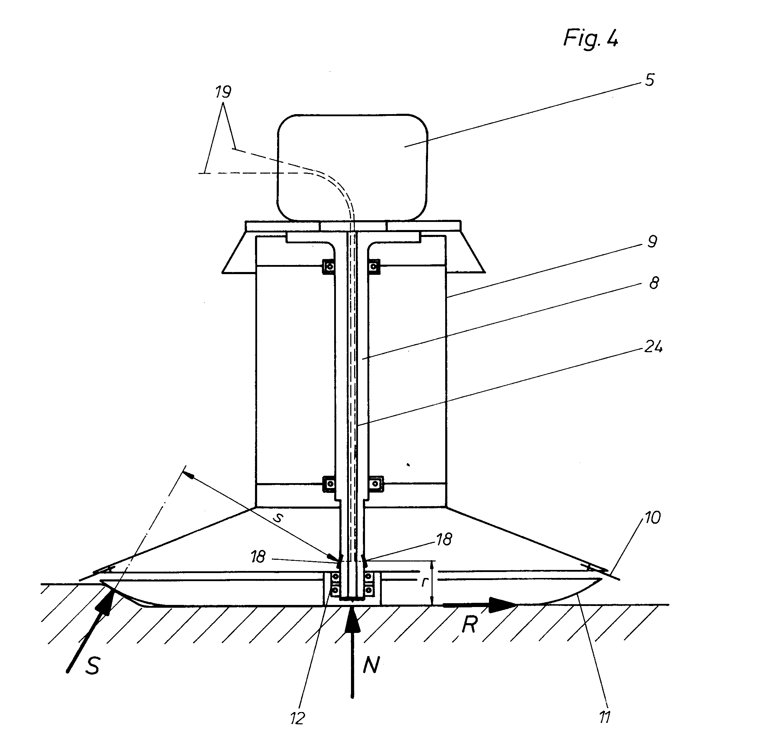

Fig. 4 zeigt einen Schnitt durch eine Mähtrommel in vergrößertem Maßstab.

Ein Schlepper (1) hat ein Front-Dreipunktgestänge (2) mit einem Tragrahmen (3). Ein Kreiselmähwerk (4) hat ein Maschinengestell (5) mit nach hinten gerichteten Anbauplatten (6). Die Anbauplatten (6) sind drehbeweglich mit dem Tragrahmen (3) im Drehpunkt (7) verbunden. Am Maschinengestell (5) sind nach unten gerichtete Trommelachsen (8) befestigt, auf denen antreibbare Mähtrommeln (9) mit Schneidwerkzeugen (10) gelagert sind. Unterhalb der Mähtrommel (9) sind an den Trommelachsen (8) Gleitteller (11) drehbar, aber biegesteif in Kugellagern (12) gelagert. Sie liegen im Betrieb auf dem Boden auf.

Das Maschinengestell (5) trägt ein nach oben gerichtetes Horn (13), an dem die Kolbenstange (14) eines hydraulischen, doppelt wirkenden Hubzylinders (15) angreift, der seinerseits an eine Lasche (16) des Tragrahmens (3) angelenkt ist. Eine Zugfeder (17) ist zwischen das Maschinengestell (5) und den Tragrahmen (3) eingeschaltet und dient dazu, das Kreiselmähwerk (4) in der Transport- und der Arbeitsstellung zu entlasten.

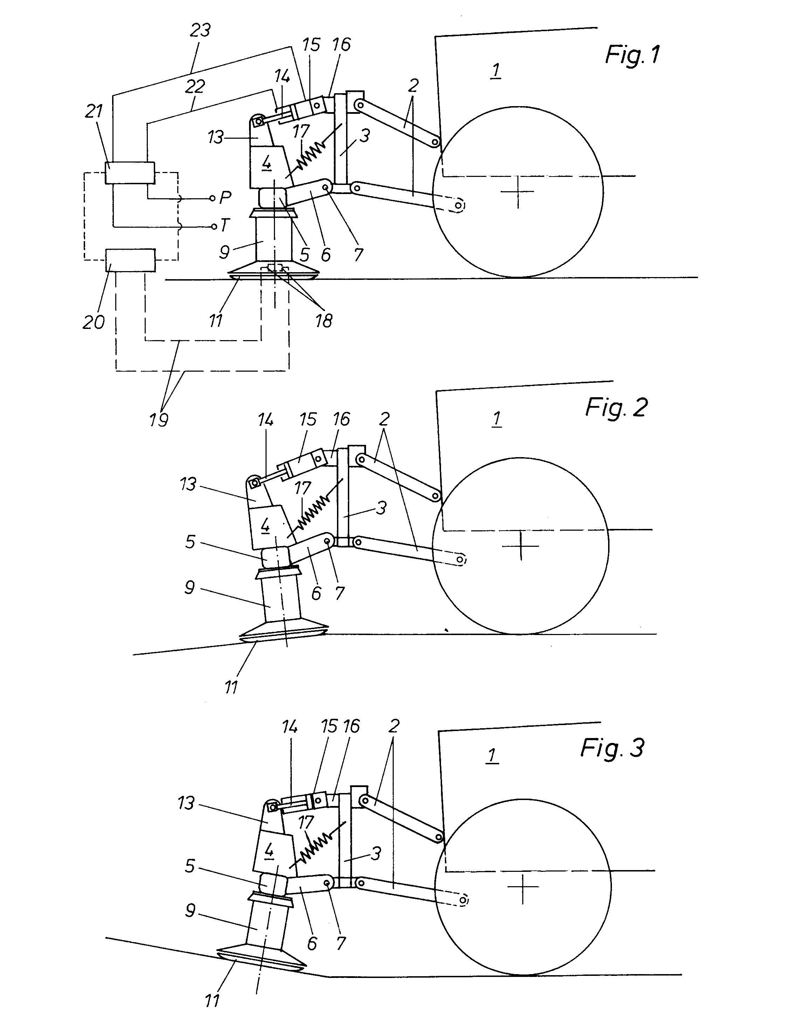

Im unteren Bereich der Trommelachse (8) sind Dehn-Meßstreifen (18) geklebt, die so geschaltet sind, daß sie Biegekräfte an der Trommelachse (8) in einer in Fahrtrichtung liegenden Vertikalebene registrieren können. Ihre Zuleitungen (19) sind durch eine Mittelbohrung (24) der Trommelachse (8) geführt. Sie könnten auch in einer Kerbe am Umfang der Trommelachse (8) verlegt sein. Die Zuleitungen (19) werden zu einem Meßverstärker (20) geführt (Fig. 1), in dem die Meßimpulse verstärkt, mit einem Soll-Wert verglichen und einem Grenzwertschalter zugeführt werden. Dem Meßverstärker (20) ist ein elektromagnetisch-hydraulisches Steuerventil (21) zugeordnet, das einerseits über Zuleitungen (P, T) mit Druckflüssigkeit versorgt wird und andererseits über Druckleitungen (22, 23) den Hydraulikzylinder (15) betätigt. Das elektromagnetisch-hydraulische Steuerventil (21) besitzt außerdem eine Schwimmstellung, bei der die Hydraulikflüssigkeit drucklos umlaufen kann.

Bei dem beschriebenen Kreiselmähwerk (4) können ein oder mehrere Mähtrommeln (9) an ihren Trommelachsen (8) mit Dehn-Meßstreifen (18) versehen sein, die gegebenenfalls alle auf den Meßverstärker (20) einwirken. Sie können in ihm so geschaltet sein, daß nur das größte der auf die verschiedenen Trommelachsen (8) wirkende Biegemoment das elektromagnetisch-hydraulische Steuerventil (21) aktiviert, oder die einzeln gemessenen Biegemomente können nach einem frei wählbaren Schlüssel gewichtet werden.

Beim Betrieb des Kreiselmähwerkes (4) treten zwischen Boden und Gleitteller (11) horizontale Reibungskräfte (R) auf, die mit einem Hebelarm (r) auf die Meßstelle an der Trommelachse (8) wirken und dort ein linksdrehendes Biegemoment erzeugen. Da der Hebelarm (r) klein ist und der Auflagedruck der Gleitteller (11) auf den Boden wegen der Wirkung der Zugfeder (17) nahezu konstant ist, kann das aus den Reibungskräften (R) entstehende Biegemoment leicht weggeeicht werden.

Im Betrieb tritt zwischen Boden und Gleitteller (11) eine Normalkraft (N) auf, die ganz oder nahezu zentrisch auf den Gleitteller (11) wirkt und dadurch kein nennenswertes Biegemoment an der Meßstelle erzeugt. Das elektromagnetisch-hydraulische Steuerventil (21) schaltet dann auf Schwimmstellung und behält diese auch bei, solange ein wählbarer Grenzwert für das Biegemoment nicht überschritten wird.

Wenn durch Auftreffen auf ein Hindernis eine Störkraft (S) mit einem Hebelarm (s) auftritt, entsteht an der Meßstelle (18) ein rechtsdrehendes Biegemoment nennenswerter Größe. Es wird jetzt über den Meßverstärker (20) das elektromagnetisch-hydraulische Steuerventil (21) aktiviert, das über die Druckleitung (22) den Hydraulikzylinder (15) beaufschlagt. Das ganze Kreiselmähwerk (4) wird dadurch schnell rechtsdrehend geschwenkt und kann dem Hindernis ausweichen. Umgekehrt kann eine Störkraft auf der anderen Seite des Gleittellers (11) das Kreiselmähwerk (4) linksdrehend verschwenken.

Die Erfindung kann sinngemäß auch bei anderen Arbeitsgeräten angewandt werden, die in der Arbeit mittels eines Gleittellers oder auch mittels eines Radfahrwerkes über den Boden geführt werden und die beim Auftreffen auf ein Hindernis diesem durch Verschwenken um eine Querachse ausweichen sollen.

## Patentansprüche

1. Kreiselmähwerk zum Frontanbau an Schlepper mit einem Maschinengestell, das um eine quer zur Fahrrichtung gelegene Horizontalachse schwenkbar mit einem Tragrahmen der Dreipunktaufhängung eines Schleppers verbunden ist und das nach unten gerichtete Trommelachsen trägt, an denen einerseits antreibbare Mähtrommeln gelagert sind und andererseits darunterliegende, drehbeweglich, aber biegesteif mit den Trommelachsen verbundene Gleitteller befestigt sind und bei dem zwischen Maschinengestell und einem Bauteil der Dreipunkt-Aufhängung ein Stellglied vorgesehen ist, das dazu dient, die Mähtrommeln in Arbeitsstellung etwa senkrecht zu der Bodenoberfläche einzustellen, dadurch gekennzeichnet, daß das Stellglied als doppelt wirkender Hydraulikzylinder (15) oder dergleichen ausgebildet ist, der von einem Meßglied (18) angesteuert wird, das in Wirkverbindung mit einem den Boden abtastenden Bauteil (11) mindestens einer Mähtrommel (9) steht.

2. Kreiselmähwerk nach Anspruch 1, dadurch gekennzeichnet, daß das Meßglied (18) an mindestens einer Trommelachse (8) angebracht ist und auf Biegemomente in einer in Fahrrichtung liegenden Vertikalebene anspricht, die von einem Gleitteller (11) auf dessen zugehörige Trommelachse (8) übertragen werden.

3. Kreiselmähwerk nach den Ansprüchen 1 und 2, dadurch gekennzeichnet, daß das Meßglied von einem Satz von Dehn-Meßstreifen (18) gebildet wird, die dicht oberhalb der Lagerung (12) des Gleittellers (11) an der Trommelachse (8) angeordnet sind.

4. Kreiselmähwerk nach den Ansprüchen 1 - 3, dadurch gekennzeichnet, daß das Meßglied (18) nach Verstärkung des Meßwertes und Sollwertvergleich in einem Meßverstärker (20) ein elektromagnetisch betätigtes Steuerventil (21) aktiviert, das seinerseits das als Hydraulikzylinder (15) oder dergleichen ausgebildete Stellglied betätigt.

5. Kreiselmähwerk nach den Ansprüchen 1 - 4, dadurch gekennzeichnet, daß zwischen Meßglied (18) und Steuerventil (21) ein Grenzwert-Schalter eingeschaltet ist, der das Steuerventil (21) erst nach Überschreiten eines wählbaren Schwellenwertes des Biegemomentes auf die Trommelachse (8) aktiviert.

6. Kreiselmähwerk nach Anspruch 5, dadurch gekennzeichnet, daß das Steuerventil (21) unterhalb des Schwellenwertes auf Schwimmstellung gestellt ist und nach Überschreiten des Schwellenwertes das steuerventil (21) derart angesteuert wird, daß der Gleitteller (11) jeweils etwa parallel zur Bodenoberfläche steht, bzw. beim Auftreffen auf ein Hindernis diesem nach oben ausweicht.

7. Kreiselmähwerk nach den Ansprüchen 1 - 6, dadurch gekennzeichnet, daß an mehreren Mähtrommeln (9) Meßglieder (18) angeordnet sind, von denen das größte an verschiedenen Mähtrommeln (9) auftretende Biegemoment das Steuerventil (21) aktiviert, oder daß die einzeln gemessenen Biegemomente verschiedener Mähtrommeln (9) nach einem wählbaren Schlüssel das Steuerventil (21) aktivieren.

Fig.1

Fig. 2

Fig. 3

*Fig. 4*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 022 887 (CLAAS SAULGAU) <br> * Seite 4, Absatz 4 - Seite 6, Absatz 2; Abbildungen 1,2 * * <br> – – – | 1,4 | A 01 B 63/114 <br> A 01 D 41/14 |
| Y | WO-A-8 600 002 (TAARUP) <br> * Seite 2, Zeile 17 - Seite 4, Zeile 8; Ansprüche 1,2; Abbildungen 1-3 * * <br> – – – | 1,4 | |
| A | EP-A-0 234 585 (DEERE & COMPANY) <br> * Seite 4, Zeile 39 - Seite 5, Zeile 42 * * * Seite 7, Zeile 30 - Seite 9, Zeile 24; Abbildungen 1-13 * * <br> – – – | 1,2,5-7 | |
| A | US-A-4 136 508 (COLEMAN ET AL.) <br> * Spalte 4, Zeile 45 - Spalte 5, Zeile 2 * * * Spalte 6, Zeile 59 - Spalte 9, Zeile 24; Abbildungen 1-5 * * <br> – – – | 1,4-7 | |
| A | DE-U-8 701 093 (BERNARD KRONE) <br> * Seite 8, Zeile 12 - Seite 14, Zeile 21; Abbildungen 1-3 * * <br> – – – – – | 1,6 | |

**RECHERCHIERTE SACHGEBIETE (Int. Cl.5)**

A 01 B
A 01 D

**Der vorliegende Recherchenbericht wurde für alle Patentansprüche erstellt**

| Recherchenort | Abschlußdatum der Recherche | Prüfer |
|---|---|---|
| Den Haag | 31 Oktober 91 | WILLIAMS M.J. |